# EUROPEAN PATENT APPLICATION

(11) **EP 4 843 802 A1**
(43) Date of publication of application: **25.11.2026**
(21) Application number: 24918219.7
(22) Date of filing: 20.11.2024
(51) Int. Cl.: B60K 1/00, B60K 17/04, B60K 17/02

(54) **DISTRIBUTED ELECTRIC DRIVE SYSTEM AND VEHICLE**

(30) Priority: 17.01.2024 CN 202410071566; 17.01.2024 CN 202420118467 U
(71) Applicant: Guangzhou Automobile Group Co., Ltd., Guangzhou, Guangdong 511434 (CN)
(72) Inventor: XIN, Faqiao, Guangzhou, Guangdong 511434 (CN); MIAO, Wei, Guangzhou, Guangdong 511434 (CN); ZHOU, Wentai, Guangzhou, Guangdong 511434 (CN); SHI, Guofei, Guangzhou, Guangdong 511434 (CN); LIN, Zhifeng, Guangzhou, Guangdong 511434 (CN); ZHANG, Anwei, Guangzhou, Guangdong 511434 (CN)
(74) Representative: Metida
(86) International application number: PCT/CN2024/133171
(87) International publication number: WO 2025/152610

(57) **Abstract**

Provided are a distributed electric drive system and a vehicle. The distributed electric drive system includes a drive motor, a first transmission device, and a second transmission device. The drive motor is provided with a first output shaft. The first transmission device and the second transmission device each include a reversing device and a drive shaft. The reversing device includes a first transmission assembly, an engaging member, and a second transmission assembly. The drive shaft is in drive connection with wheels. The engaging member is connected to the first output shaft. The engaging member is configured to select one of the first transmission assembly and the second transmission assembly to be a connection object. The first transmission assembly is configured to, driven by the first output shaft, drive the drive shaft to rotate in a first direction. The second transmission assembly is configured to, driven by the first output shaft, drive the drive shaft to rotate in a second direction, such that the wheels on both sides of the drive motor can achieve opposite steering functions. This distributed electric drive system drives the wheels on both sides simultaneously with one drive motor, and has the advantage of a compact structure.

## Description

### TECHNICAL FIELD

The present application relates to the technical field of vehicles, and in particular, to a distributed electric drive system and a vehicle.

### BACKGROUND

Existing distributed electric drive technologies all use two motors to control the torque and rotation direction of the wheels on both sides respectively. This technology can achieve independent control of each wheel, thereby optimizing power distribution and handling performance of the vehicle. However, this arrangement results in a large number of motors, and requires a large number of wires and electronic control units to connect and control each motor. Distributed electric drives generally suffer from high costs and difficulty in layout.

### SUMMARY

In view of the shortcomings of the prior art, an objective of the present application is to provide a distributed electric drive system and a vehicle, which optimizes the layout design of the distributed electric drive system, decreases the structural complexity of the distributed electric drive system, and reduces production costs.

To achieve the above objective, the present application uses the following technical solutions.

In a first aspect of the present application, a technical solution provides a distributed electric drive system, which includes a drive motor, a first transmission device, and a second transmission device. The drive motor is provided with a first output shaft, one axial end of the first output shaft is connected to the first transmission device, and the other axial end of the first output shaft is connected to the second transmission device. The first transmission device and the second transmission device each include:
a reversing device and a drive shaft, the reversing device including a first transmission assembly, an engaging member and a second transmission assembly, wherein the drive shaft is configured to be in drive connection with wheels, the engaging member is connected to the first output shaft, the engaging member is configured to select one of the first transmission assembly and the second transmission assembly to be a connection object, and the engaging member transmits power from the first output shaft to the connection object by engaging with the connection object, and wherein the first transmission assembly is configured to, driven by the first output shaft, drive the drive shaft to rotate in a first direction, and the second transmission assembly is configured to, driven by the first output shaft, drive the drive shaft to rotate in a second direction, the first direction being opposite to the second direction.

In the first aspect of the present application, disclosed is a distributed electric drive system, which employs a drive motor. The drive motor is provided with the first output shaft, the one axial end of the first output shaft is connected to a first transmission device, and the other axial end of the first output shaft is connected to a second transmission device. The output ends of the first transmission device and the second transmission device are correspondingly connected to the wheels. The first transmission device and the second transmission device each include the reversing device and the drive shaft. The reversing device includes the first transmission assembly, an engaging member, and a second transmission assembly. By disposing the engaging member, one of the first transmission assembly and the second transmission assembly can be engaged. The engaging member is configured to transmit the rotational power of the first output shaft to the first transmission assembly or the second transmission assembly. Moreover, the first transmission assembly and the second transmission assembly rotate in opposite directions, such that the first transmission assembly or the second transmission assembly can drive the drive shaft to rotate in different directions. In this way, by selectively engaging the engaging member with the first transmission assembly and the second transmission assembly, the drive shaft can rotate in different directions, thereby driving the drive shaft to rotate the wheels in opposite directions, thus enabling the wheels on both sides of the drive motor to achieve the function of turning in opposite directions. This distributed electric drive system drives both wheels simultaneously with a single drive motor, offering advantages such as a compact structure, significantly reducing production and manufacturing costs. It also adapts to different driving needs, increasing vehicle handling and adaptability, enabling it to better cope with complex driving environments and mission requirements.

According to some technical solutions of the present application, the first transmission assembly includes a first gear mechanism, an input end of the first gear mechanism is capable of being engaged by the engaging member to, driven by the first output shaft, rotate, and an output end of the first gear mechanism is connected to the drive shaft;
the second transmission assembly includes a second gear mechanism, an input end of the second gear mechanism is capable of being engaged by the engaging member to, driven by the first output shaft, rotate, an output end of the second gear mechanism is connected to the drive shaft, and an idler gear being provided in the second gear mechanism such that a rotation direction of the output end of the second gear mechanism is opposite to a rotation direction of the output end of the first gear mechanism.

According to some technical solutions of the present application, the first gear mechanism includes a first driving gear and a first drive gear, the first drive gear being connected to the drive shaft, and the first driving gear meshing with the first drive gear;
the second gear mechanism includes a second driving gear, a second drive gear, and the idler gear, wherein the first driving gear and the second driving gear are axially spaced opposite each other; the engaging member is disposed between the first driving gear and the second driving gear to selectively engage axially with either the first driving gear or the second driving gear; the idler gear meshes between the second driving gear and the second driving gear; and the second drive gear is connected to the drive shaft. By controlling the engaging member to selectively engage with the first driving gear and the second driving gear on both sides, under the action of the idler gear, the rotation direction of the second drive gear is the same as that of the second drive gear. Therefore, the drive shaft is driven to rotate in the same direction as the first output shaft, thereby realizing the opposite rotation direction of the wheels and achieving flexible switching of power and change of direction.

According to some technical solutions of the present application, the first gear mechanism is configured to be a reduction gear set.

According to some technical solutions of the present application, the second gear mechanism is configured to be a reduction gear set. By configuring the first gear mechanism and/or the second gear mechanism into a reduction gear set, the load on the motor at low speeds or under braking conditions can be reduced, thus prolonging the service life of the motor. At the same time, the reduction gear set can also improve the response speed and acceleration of the motor, making the vehicle start and accelerate more quickly.

According to some technical solutions of the present application, the engaging member is one of a brake, a clutch or a synchronizer. The first transmission assembly and the second transmission assembly can be connected or disconnected under the action of the engaging member, thereby achieving the purpose of wheel reversal.

According to some technical solutions of the present application, the distributed electric drive system further includes a clutch, one end of the clutch is connected to the drive shaft, and the other end of the clutch is connected to the wheels. The introduction of the clutch further enhances the flexibility and controllability of power transmission, thereby controlling the torque distribution transmitted to the wheels on both sides by controlling the clamping force of the clutches on both sides of the drive motor.

According to some technical solutions of the present application, the distributed electric drive system further includes a reduction mechanism, the input end of the reduction mechanism is connected to the drive shaft, and the output end of the reduction mechanism is in drive connection with the wheels. In this way, the deceleration mechanism can adapt to different driving needs and task requirements. By adjusting the deceleration ratio of the deceleration mechanism, it can adapt to different vehicle driving speeds, loads and terrain conditions, thereby improving the adaptability and performance of the vehicle.

According to some technical solutions of the present application, the speed reduction mechanism includes a first output gear and a second output gear that mesh with each other; the first output gear is connected to the drive shaft, and the second output gear is connected to a second output shaft configured to be in drive connection with the wheels. In this way, the first output gear and the second output gear transmit power through meshing. Specifically, the first output gear is connected to the drive shaft to receive power from the drive shaft, while the second output gear is connected to the wheels through the second output shaft to transmit power to the wheels.

According to some technical solutions of the present application, the second output shaft is coaxially aligned with the first output shaft. This reduces the mounting space of the distributed electric drive system and the circumferential dimensions of the entire power transmission system, further reducing the complexity of the overall structure.

According to some technical solutions of the present application, a clutch is disposed on the second output shaft, and the clutch is connected between the second output gear and the wheels.

According to some technical solutions of the present application, the distributed electric drive system further includes a housing assembly including a motor housing, a left housing, and a right housing; one side of the motor housing is connected to the left housing, and the other side of the motor housing is connected to the right housing; the drive motor is mounted inside the motor housing; and one axial end of the first output shaft is supported on the left housing by bearings, and the other axial end of the first output shaft is supported on the right housing by bearing. By disposing the housing components, the entire distributed electric drive system becomes more robust and compact, increasing the structural strength and stability of the entire system, which is beneficial to improving vehicle handling and safety.

In a second aspect of the present application, provided is a vehicle including a vehicle body, wheels, and an electric drive system. The wheels are mounted on the vehicle body, and the electric drive system includes a distributed electric drive system as described in any of the above embodiments. The distributed electric drive system is configured to drive the two wheels to move. By incorporating the distributed electric drive system of any of the above embodiments into a vehicle, the entire vehicle only needs to be equipped with one drive motor. This single drive motor simultaneously drives the wheels on both sides, resulting in a compact structure, significantly reduced production and manufacturing costs, and a substantial reduction in the overall weight of the vehicle. Furthermore, the reversing device enables the wheels on both sides to steer in opposite directions, adapting to different driving needs and increasing the handling and adaptability of the vehicle, enabling it to better cope with complex driving environments and task requirements.

### BRIEF DESCRIPTION OF THE DRAWINGS

FIG. 1 is a schematic diagram of a distributed electric drive system according to an embodiment of the present application;
FIG.2 is a partial enlarged view of a distributed electric drive system according to an embodiment of the present application.

The correspondence between the reference numerals and the component names is as follows:
1, drive motor; 11, first output shaft;
2, reversing device; 21, first transmission assembly; 211, first driving gear; 212, first drive gear; 22, engaging member; 23, second transmission assembly; 231, second driving gear; 232, second drive gear; 233, idler gear;
3, drive shaft;
4, speed reduction mechanism; 41, first output gear; 42, second output gear; 43, second output shaft;
5, housing assembly; 51, motor housing; 52, left side housing; 521, first housing member; 522 second housing member; 523, third housing member; 53 right housing;
6, clutch.

### DETAILED DESCRIPTION

The present application provides a distributed electric drive system and a vehicle. To make the objectives, technical solutions and effects of the present application clearer and more explicit, the present application will be further described in detail below with reference to the accompanying drawings and embodiments. It should be understood that the specific embodiments described herein are for illustrative purposes only and are not intended to limit the scope of protection of the present application.

In the description of the present application, it should be understood that the terms "upper", "lower", "inner", "outer", etc., indicate the orientation or positional relationship based on the orientation or positional relationship shown in the accompanying drawings. They are only for the convenience of describing the present application and simplifying the description, and do not indicate or imply that the device or element referred to must have a specific orientation, or be constructed and operated in a specific orientation. Therefore, they should not be construed as limiting the present application.

In the description of the present application, it should be noted that, unless otherwise explicitly specified and limited, the terms "mount", "connect" and "join" should be interpreted broadly, for example, they can be fixed connections, detachable connections, or integral connections. It can be a mechanical connection, an electrical connection, or a connection that can communicate with each other; it can be a direct connection or an indirect connection through an intermediate medium; it can be a connection within two components or an interaction between two components. Those skilled in the art can understand the specific meaning of the above terms in the present application according to the specific circumstances.

The preferred embodiments of the present application will be further described in detail below with reference to the accompanying drawings.

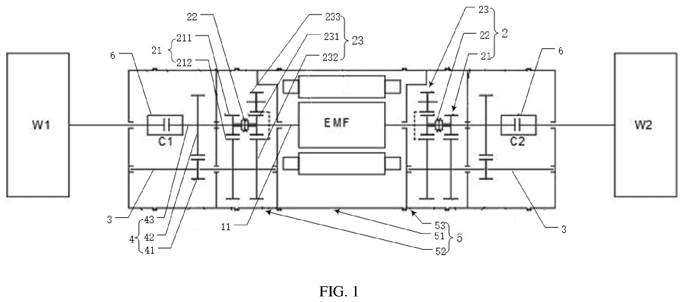

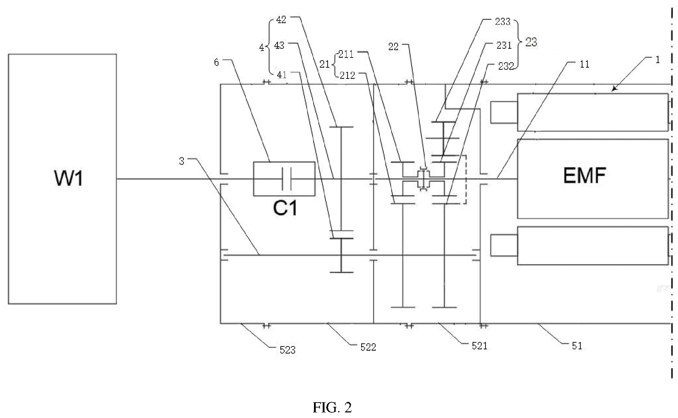

Please refer to FIGS. 1 and 2. An embodiment of a first aspect of the present application provides a distributed electric drive system including a drive motor 1, a first transmission device, and a second transmission device.

The drive motor 1 includes a first output shaft 11, one axial end of the first output shaft 11 is connected to the first transmission device, and the other axial end of the first output shaft 11 is connected to the second transmission device. Thus, the first transmission device and the second transmission device are located on both sides of the drive motor 1, and the first transmission device and the second transmission device are in drive connection with the wheels. The first transmission device and the second transmission device drive the wheels connected to thereto to rotate under the drive of the first output shaft of the drive motor 1.

The first transmission device and the second transmission device each include a reversing device 2 and a drive shaft 3. The reversing device 2 includes a first transmission component 21, an engaging member 22, and a second transmission component 23. The drive shaft 3 is configured to drive the wheels. The engaging member 22 is connected to the first output shaft 11. The engaging member 22 is configured to select one of the first transmission component 21 and the second transmission component 23 as a connection object. The engaging member 22 transmits the power of the first output shaft 11 to the connection object by engaging with the connection object. The first transmission component 21 is configured to drive the drive shaft 3 to, driven by the first output shaft 11, rotate in a first direction. The second transmission component 23 is configured to drive the drive shaft 3 to, driven by the first output shaft 11, rotate in a second direction. The first direction is opposite to the second direction.

To illustrate more specifically, taking counterclockwise rotation of the wheels as the first direction and the rotation of the wheels in the first direction as the forward direction of the vehicle, when the engaging member 22 is connected to the first transmission component 21, the first output shaft 11 of the drive motor 1 rotates, thereby driving the first transmission component 21 to drive the drive shaft 3 to rotate. The drive shaft 3 drives the wheels to rotate in the first direction. Thus, when it is necessary to reverse the rotation of one side of the wheel, by controlling the engaging member 22 connected to the wheels on that side to select the second transmission assembly 23 as the connection object, the first output shaft 11 of the drive motor 1 rotates, thereby driving the second transmission assembly 23 to drive the drive shaft 3 to rotate. The drive shaft 3 drives the wheels to rotate in the second direction, thereby realizing the reversal of the wheels.

Furthermore, by controlling the engaging members 22 on both sides of the drive motor 1 to engage with the first transmission assembly 21 and the second transmission assembly 23 respectively, the wheels on the left and right sides of the distributed electric drive system rotate in different directions, thereby realizing the function of turning left or right or making a U-turn. In this way, the function of distributed electric drive is realized through a single drive motor 1. The structure of this distributed electric drive system is compact and simple, which greatly reduces production and manufacturing costs. When the distributed electric drive system is applied to a vehicle, the electric drive system of the entire vehicle only needs to be equipped with a single drive motor 1, which greatly reduces the weight and structural complexity of the vehicle. At the same time, it can adapt to different driving needs, increasing the handling and adaptability of the vehicle, enabling it to better cope with complex driving environments and task requirements.

In some embodiments, the first transmission assembly 21 includes a first gear mechanism, an input end of the first gear mechanism can be engaged by the engaging member 22 to, driven by the first output shaft 11, rotate, and the output end of the first gear mechanism is connected to the drive shaft 3.

The second transmission assembly 23 includes a second gear mechanism. The input end of the second gear mechanism can be engaged by the engaging member 22 to, driven by the first output shaft 11, rotate. The output end of the second gear mechanism is connected to the drive shaft 3. An idler gear 233 is disposed in the second gear mechanism such that the rotation direction of the output end of the second gear mechanism is opposite to the rotation direction of the output end of the first gear mechanism. With the arrangement of the first gear mechanism and the second gear mechanism, power can be transmitted through a plurality of gears, enabling the system to withstand greater torque and power. This allows for high-precision and high-efficiency power transmission, and facilitates easy adjustment of speed and direction, thereby improving the power transmission performance and handling stability of the vehicle.

The second transmission assembly 23 is equipped with an idler gear 233. Specifically, the idler gear is a gear that acts as a drive gear between two non-contacting drive gears. The idler gear meshes with both gears simultaneously to change the rotation direction of the driven gear such that it is the same as the drive gear. By incorporating the idler gear 233 in the second gear mechanism, the rotation direction of the output end can be changed, thereby altering the direction of the rotation of the wheels.

In some embodiments, the first gear mechanism includes a first driving gear 211 and a first drive gear 212, the first drive gear 212 being connected to the drive shaft 3, and the first driving gear 211 meshing with the first drive gear 212.

The second gear mechanism includes a second driving gear 231, a second drive gear 232, and an idler gear 233. The first driving gear 211 and the second driving gear 231 are axially spaced opposite each other. The engaging member 22 is disposed between the first driving gear 211 and the second driving gear 231 to selectively engage with the first driving gear 211 or the second driving gear 231 axially. The idler gear 233 meshes between the second driving gear 231 and the second drive gear 232. The second drive gear 232 is connected to the drive shaft 3.

Specifically, the first driving gear 211 and the second driving gear 231 are axially spaced opposite each other, and the engaging member 22 is connected to the first output shaft 11 of the drive motor 1. The first driving gear 211 and the second driving gear 231 are sleeved on the first output shaft 11 of the drive motor 1, and the engaging member 22 is located between the first driving gear 211 and the second driving gear 231. By controlling the engaging member 22 to selectively engage with the first driving gear 211 or the second driving gear 231 on both sides, the first driving gear 211 or the second driving gear 231 rotates with the first output shaft 11, and the direction of wheel rotation is changed under the action of the idler gear, realizing flexible switching of power and change of direction.

In detail, referring to FIG. 2, when the engaging member 22 is connected to the first drive gear 211, the rotation direction of the first driving gear 211 is the same as the rotation direction of the first output shaft 11. The first drive gear 212 meshes with the first driving gear 211, thereby driving the first drive gear 212 and the drive shaft 3 to rotate in a first direction opposite to the rotation direction of the first output shaft 11. When the engaging member 22 is connected to the second driving gear 231, under the action of the idler gear 233, the rotation direction of the second drive gear 232 is the same as the rotation direction of the second driving gear 231, thereby driving the drive shaft 3 to rotate in a second direction that is the same as the rotation direction of the first output shaft 11.

In some embodiments, the first gear mechanism is configured to be a reduction gear set.

In some embodiments, the second gear mechanism is configured to be a reduction gear set. By configuring the first gear mechanism and/or the second gear mechanism as a reduction gear set, the load on the motor at low speeds or under braking conditions can be reduced, thus prolonging the service life of the motor. At the same time, the reduction gear set can also improve the response speed and acceleration of the motor, making the vehicle start and accelerate more quickly.

In some embodiments, the engaging member 22 is one of a brake, a clutch, or a synchronizer, such that the first transmission assembly and the second transmission assembly can be connected or disconnected under the action of the engaging member 22, thereby achieving the purpose of wheel reversal.

For example, the engaging member 22 of the present application employs a synchronizer, which can smoothly connect or disconnect the first transmission assembly and the second transmission assembly. The application of the synchronizer can reduce the impact when selectively engaging with the first transmission assembly or the second transmission assembly, so as to achieve smooth power transmission and reversing operation.

In some embodiments, the distributed electric drive system also includes a clutch 6, one end of the clutch 6 is in drive connection with the drive shaft 3, and the other end of the clutch 6 is connected to the wheels. The introduction of clutch 6 further enhances the flexibility and controllability of power transmission. By controlling the clamping force of the clutch 6 on both sides of drive motor 1, the torque distribution transmitted to both wheels can be controlled.

Specifically, when a vehicle needs to accelerate or travels on a slippery surface, more torque can be distributed to the drive wheels to improve the acceleration performance and handling stability of the vehicle. Conversely, when the vehicle needs to decelerate or travels on a bumpy surface, more torque can be distributed to the driven wheels to increase the braking effect of the vehicle and reduce the impact of bumps on the vehicle. Alternatively, depending on the need for turning around or changing direction, the clamping force of the left and right clutches can be controlled to achieve torque transmission and distribution between the left and right wheels. By precisely controlling the operation of the clutches, more precise speed control and power transmission can be achieved to meet various driving needs and task requirements.

In some embodiments, the distributed electric drive system further includes a speed reduction gear 4, an input end of the speed reduction gear 4 is connected to the drive shaft 3, and an output end of the speed reduction gear 4 is in drive connection with the wheel. The introduction of the speed reduction mechanism 4 can further reduce the power transmission speed from the drive motor 1 to the wheels, achieving more efficient and smoother power output, which helps to improve the handling and stability of the vehicle, especially at low speeds or under braking conditions. In this way, the deceleration mechanism 4 can adapt to different driving needs and task requirements. By adjusting the deceleration ratio of the deceleration mechanism 4, it can adapt to different vehicle driving speeds, loads and terrain conditions, thereby improving the adaptability and performance of the vehicle.

For example, the speed reduction mechanism 4 may be of different types, such as a gear reduction mechanism or a planetary gear reduction mechanism. The gear reduction mechanism has high transmission efficiency and smoothness, while the planetary gear reduction mechanism has high load-bearing capacity and compact structure, making it suitable for vehicles with different needs.

In some embodiments, the speed reduction mechanism 4 includes a first output gear 41 and a second output gear 42 that mesh with each other. The first output gear 41 is connected to the drive shaft 3, and the second output gear 42 is connected to a second output shaft 43, which is in drive connection with the wheels. In this way, the first output gear 41 and the second output gear 42 transmit power through meshing. The first output gear 41 is connected to the drive shaft 3 and receives power from the drive shaft 3, while the second output gear 42 is connected to the wheels through the second output shaft 43 and transmits power to the wheels.

Of course, the number of teeth and the speed ratio of the first output gear 41 and the second output gear 42 can be adjusted as needed. By changing the number of teeth and the speed ratio, the reduction ratio of the reduction mechanism can be changed, thereby adapting to different vehicle design and usage requirements.

In some embodiments, the second output shaft 43 is coaxially aligned with the first output shaft 11. Specifically, referring to FIG. 2, the first output shaft 11 and the second output shaft 43 of the drive motor 1 are located on the same axis. This can reduce the mounting space of the distributed electric drive system and the circumferential dimension of the entire power transmission system, and further reduce the complexity of the entire structure.

Furthermore, combining the first gear mechanism of the fixed-axis gear train in the first transmission assembly 21 and the second gear mechanism of the fixed-axis gear train in the second transmission assembly 23, the fixed-axis gear train means that the axis of each gear is fixed and is not affected by the bending deformation of the shaft and various movements, which ensures the stability and efficiency of power transmission, further reduces the circumferential size and structural complexity of the distributed electric drive system, reduces the circumferential envelope, thereby improving the heat dissipation performance of the vehicle and reducing the noise level, and improving the comfort and performance of the vehicle.

In some embodiments, a clutch 6 is disposed on the second output shaft 43, and the clutch 6 is connected between the second output gear 42 and the wheels. In detail, referring to FIG. 2, the second output shaft 43 serves as the output end of the speed reduction mechanism 4. The second output gear 42 is sleeved on one axial end of the second output shaft 43, and the other axial end of the second output shaft 43 is connected to the wheels. The clutch 6 is disposed on the second output shaft 43, which is connected to the second output shaft 43 between the second output gear 42 and the wheels. By controlling the clamping force of the clutch 6, the torque distribution transmitted by the electric drive system to both wheels is controlled, thereby achieving more precise speed control and power transmission to meet various driving needs and task requirements.

In some embodiments, the distributed electric drive system further includes a housing assembly 5, which includes a motor housing 51, a left housing 52 and a right housing 53. One side of the motor housing 51 is connected to the left housing 52, and the other side of the motor housing 51 is connected to the right housing 53. The drive motor 1 is mounted inside the motor housing 51, and one axial end of the first output shaft 11 is supported on the left housing 52 by bearings, and the other axial end of the first output shaft 11 is supported on the right housing 53 by bearings.

One side of the motor housing 51 is connected to the left housing 52, and the other side of the motor housing 51 is connected to the right housing 53. The drive motor 1 is mounted inside the motor housing 51, which provides better protection for the drive motor 1 during operation and helps to improve the service life and reliability of the drive motor 1. By disposing the housing assembly 5, the entire distributed electric drive system becomes more robust and compact, increasing the structural strength and stability of the entire system, which is beneficial to improving the handling and safety of the vehicle. Moreover, one end of the first output shaft 11 is supported on the left housing 52 by bearings, and the other end of the first output shaft 11 is supported on the right housing 53 by bearings. This design allows the first output shaft 11 to be better supported and protected during operation, which is conducive to improving the service life and stability of the first output shaft.

More specifically, the left housing 52 includes a first housing member 521, a second housing member 522, and a third housing member 523. The second housing member 522 is connected between the first housing member 521 and the third housing member 523. One axial end of the first output shaft 11 of the drive motor 1 is connected to the first housing member 521 through a bearing. The first housing member 521 and the second housing member 522 enclose a space for accommodating the reversing device 2. The second housing member 522 and the third housing member 523 enclose a space for accommodating the speed reduction mechanism 4 and the drive shaft 3. The right housing 53 can be configured the same as the left housing 52.

In a second aspect of the present application, disclosed is a vehicle, which includes a vehicle body, wheels, and an electric drive system. The wheels are mounted on the vehicle body, and the electric drive system includes the distributed electric drive system as described in any of the above embodiments, which is configured to drive the movement of two wheels. By incorporating the distributed electric drive system of any of the above embodiments into a vehicle, the entire vehicle only needs to be equipped with one drive motor. This single drive motor simultaneously drives the wheels on both sides, resulting in a compact structure, significantly reduced production and manufacturing costs, and a substantial reduction in the overall weight of the vehicle. Furthermore, the reversing device enables the wheels on both sides to steer in opposite directions, adapting to different driving needs and increasing the handling and adaptability of the vehicle, enabling it to better cope with complex driving environments and task requirements.

It is understood that those skilled in the art can make equivalent substitutions or changes to the technical solution and inventive concept of the present application, and all such changes or substitutions should fall within the protection scope of the present application.

## Claims

1. A distributed electric drive system, **characterized by** comprising a drive motor, a first transmission device, and a second transmission device, wherein the drive motor is provided with a first output shaft, one axial end of the first output shaft is connected to the first transmission device, the other axial end of the first output shaft is connected to the second transmission device, and the first transmission device and the second transmission device each comprise:
a reversing device and a drive shaft, the reversing device comprising a first transmission assembly, an engaging member and a second transmission assembly, wherein the drive shaft is configured to be in drive connection with wheels, the engaging member is connected to the first output shaft, the engaging member is configured to select one of the first transmission assembly and the second transmission assembly to be a connection object, and the engaging member transmits power from the first output shaft to the connection object by engaging with the connection object, and wherein the first transmission assembly is configured to, driven by the first output shaft, drive the drive shaft to rotate in a first direction, and the second transmission assembly is configured to, driven by the first output shaft, drive the drive shaft to rotate in a second direction, the first direction being opposite to the second direction.

2. The distributed electric drive system according to claim 1, **characterized in that**
the first transmission assembly comprises a first gear mechanism, an input end of the first gear mechanism is capable of being engaged by the engaging member to, driven by the first output shaft, rotate, and an output end of the first gear mechanism is connected to the drive shaft; and
the second transmission assembly comprises a second gear mechanism, an input end of the second gear mechanism is capable of being engaged by the engaging member to, driven by the first output shaft, rotate, an output end of the second gear mechanism is connected to the drive shaft, and an idler gear is provided in the second gear mechanism such that a rotation direction of the output end of the second gear mechanism is opposite to a rotation direction of the output end of the first gear mechanism.

3. The distributed electric drive system according to claim 2, **characterized in that**
the first gear mechanism comprises a first driving gear and a first drive gear, the first drive gear being connected to the drive shaft, and the first driving gear meshing with the first drive gear;
the second gear mechanism comprises a second driving gear, a second drive gear, and the idler gear, wherein the first driving gear and the second driving gear are axially spaced opposite each other; the engaging member is disposed between the first driving gear and the second driving gear to selectively engage axially with either the first driving gear or the second driving gear; the idler gear meshes between the second driving gear and the second drive gear; and the second drive gear is connected to the drive shaft.

4. The distributed electric drive system according to claim 1, **characterized in that**
the engaging member is one of a brake, a clutch, or a synchronizer.

5. The distributed electric drive system according to claim 1, **characterized by** further comprising:
a clutch, one end of the clutch being connected to the drive shaft and the other end of the clutch being connected to the wheels.

6. The distributed electric drive system according to any one of claims 1-5, **characterized by** further comprising:
a speed reduction mechanism, an input end of the speed reduction mechanism being connected to the drive shaft, and an output end of the speed reduction mechanism being in drive connection with the wheels.

7. The distributed electric drive system according to claim 6, **characterized in that**
the speed reduction mechanism comprises a first output gear and a second output gear that mesh with each other; the first output gear is connected to the drive shaft, and the second output gear is connected to a second output shaft configured to be in drive connection with the wheels.

8. The distributed electric drive system according to claim 7, **characterized in that**
the second output shaft is coaxially aligned with the first output shaft; and/or
the second output shaft is provided with a clutch connected between the second output gear and the wheels.

9. The distributed electric drive system according to any one of claims 1-5, **characterized by** further comprising:
a housing assembly comprising a motor housing, a left housing, and a right housing; one side of the motor housing is connected to the left housing, and the other side of the motor housing is connected to the right housing; the drive motor is mounted inside the motor housing; and one axial end of the first output shaft is supported on the left housing by bearings, and the other axial end of the first output shaft is supported on the right housing by bearings.

10. A vehicle, **characterized by** comprising a vehicle body, wheels, and an electric drive system, wherein the wheels are mounted on the vehicle body, the electric drive system comprises the distributed electric drive system according to any one of claims 1 to 9, and the distributed electric drive system is configured to drive two of the wheels to move.
